Europäisches Patentamt

European Patent Office

Office européen des brevets

(19)

(11) Publication number: **0 146 237**
**A1**

# EUROPEAN PATENT APPLICATION

(12)

(21) Application number: **84307252.1**

(22) Date of filing: **22.10.84**

(51) Int. Cl.⁴: **B 65 D 41/34**

(30) Priority: **27.10.83 US 545979**

(43) Date of publication of application: **26.06.85**
**Bulletin 85/26**

(84) Designated Contracting States: **AT BE CH DE FR GB IT LI LU NL SE**

(71) Applicant: **CONTINENTAL WHITECAP INC.,**
**2215 Sanders Road, Northbrook Illinois 60062 (US)**

(72) Inventor: **Banich, John N., Sr., 3403 West 76th Place,**
**Chicago Illinois 60652 (US)**

(74) Representative: **Hallam, Arnold Vincent et al, E.N. LEWIS**
**& TAYLOR 144 New Walk, Leicester LE1 7JA (GB)**

(54) **Closure with tamper indicating band.**

(57) This relates to a closure for containers, and more particularly to a closure which is of a molded plastics material which is cooperable with existing neck finishes and wherein the closure includes a tamper indicating band having a plurality of resilient molded-in-place barbs which will engage and lock beneath the existing shoulder of a conventional neck finish in an automatic manner so as to eliminate special tooling now required in conjunction with metal closures. Because the barbs are molded in place, they do not recede due to memory as do like barbs which are struck from the tamper indicating band.

CLOSURE WITH
TAMPER INDICATING BAND

This application is a continuation-in-part of copending application Serial No. 387,382, filed June 11, 1982, now

This invention relates in general to new and useful improvements in closures which are particularly adapted to be utilized in combination with existing glass and plastic bottles, particularly those bottles which are utilized in conjunction with carbonated beverages.

This invention particularly relates to a closure which is readily adaptable to the existing neck finish of plastic and glass bottles and wherein the closure is provided with a tamper indicating band having an automatic mechanical interlock with the existing shoulder of the present bottle neck finish.

In accordance with this invention, the closure is provided in depending relation with respect to the closure skirt with a tamper indicating band. This band is molded of a suitable plastics material and is provided with a plurality of circumferentially spaced barbs. Each barb slopes radially inwardly and upwardly and has a free end which faces the underside of the closure end wall and is lockable beneath the customary locking shoulder of existing neck finishes for bottles. Each barb is hingedly connected to the tamper indicating band such that, as the closure is applied, the barb will first swing outwardly as it contacts the screw threads of the bottle neck finish and then will be cammed outwardly by the portion of the bottle neck finish above the shoulder,

-2-

after which, when the closure is fully applied to the bottle neck finish, each barb will automatically pivot radially inwardly and lock beneath the shoulder.

In one form of the invention, the tamper indicating band is attached to the lower edge of the customary skirt by a plurality of small, axially extending, circumferentially spaced bridges. In another embodiment of the closure, the bridges may be replaced by a continuous rupturable web. In a further embodiment of the invention, the tamper indicating band is formed in circumferential segments joined by rupturable connectors whereby, when the closure is removed, the band will split to permit the barbs to swing radially outwardly to clear the shoulder.

U.S. patent No. 4,196,818 to Thomas D. Brownbill, granted April 8, 1980 relates to a closure of the type to which this invention relates. It has been found that there is a material difference between forming the closure in its entirety by injection molding as opposed to striking the barbs or retaining tabs from the wall of the tamper indicating band of the closure. Molded plastic material has a built-in memory in that once molded the material always wants to return to the original shape of the molded part. When the barbs or tabs are formed by die cutting or stamping as is specified in the Brownbill patent, with time the barbs or tabs will return to their original position, thereby defeating the purpose of such barbs or tabs and permitting the closure to be removed from an associated container in its entirety. On the other hand, when the locking barbs or tabs are molded in their inwardly displaced operative positions, they retain that position. This is the principal feature of this invention.

With the above and other objects in view that will hereinafter appear, the nature of the invention will be more clearly understood by reference to the following detailed description, the appended claims, and the several views illustrated in the accompanying drawings.

IN THE DRAWINGS:

Figure 1 is a top perspective view of the molded closure showing it applied to the neck of a conventional bottle.

Figure 2 is an enlarged fragmentary vertical sectional view taken generally along the line 2-2 of Figure 1, and shows the specifics of the molded closure and its relationship to the bottle neck finish.

Figure 3 is a fragmentary sectional view similar to Figure 2, and shows the molded closure in an initial stage of application to the bottle neck finish.

Figure 4 is another fragmentary sectional view similar to Figure 2, and shows the molded closure in a further stage of application.

Figure 5 is yet another fragmentary sectional view showing the molded closure in the process of being removed, with the tamper indicating band being retained on the bottle.

Figure 6 is an enlarged fragmentary horizontal sectional view taken through the bridges along the line 6-6 of Figure 1.

Figure 7 is a sectional view similar to Figure 6 wherein the separate bridges have been replaced by a narrow frangible web.

Figure 8 is a fragmentary vertical sectional view taken generally along the line 8-8 of Figure 7, and shows the details of the frangible web.

Figure 9 is another sectional view similar to Figure 6 wherein the tamper indicating band is divided into circumferential segments which are separable and which remain connected to the skirt.

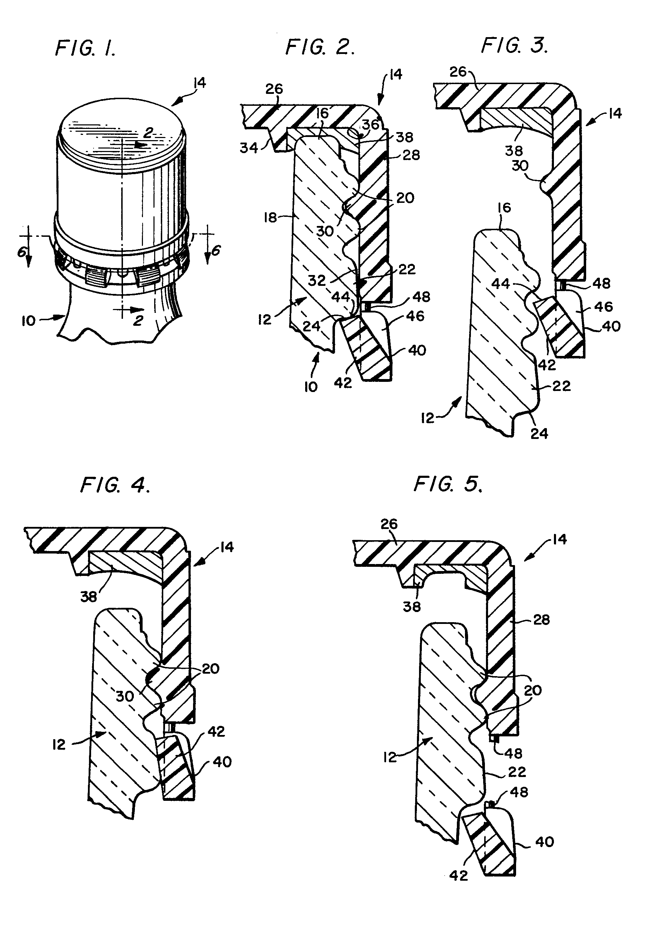

Referring now to the drawings in detail, reference is first made to Figure 1 wherein there is illustrated the upper portion only of a conventional bottle which is

-4-

normally provided with a metal screw threaded closure and wherein the closure is locked beneath a shoulder of the neck finish in a manner wherein, when the metal closure is removed, a lower portion thereof is ruptured to indicate that the closure has at least been partially removed and thus the sealed container has been tampered with. Such a bottle is generally identified by the numeral 10, and the neck finish thereof, which will be described hereinafter, is identified by the numeral 12. In accordance with this invention there has been provided a closure 14 which is formed of a plastic material and is preferably formed by injection molding.

Referring now to Figure 2, for example, it will be seen that the neck finish 12 is provided with an upper, generally rounded combined sealing and pouring end 16. The neck finish 12 defines an inner pouring spout 18. Externally, the neck finish 12 has formed on the upper part thereof threads 20. Below the threads 20, the exterior of the neck finish 12 includes a rib 22 which defines, on its underside, a locking or retaining shoulder 24. Although in the illustrated embodiment of the invention the bottle 10 is illustrated as being formed of glass, it is to be understood that the illustrated conventional neck finish 12 is also utilized in conjunction with presently available blow molded bottles, particularly bottles for carbonated beverages, although the invention is not so restricted.

The molded closure 14 is, in part, of a conventional construction and is suitably injection molded of an acceptable plastics material. The molded closure 14 includes an end panel or wall 26 which terminates at its periphery in a depending skirt 28. The skirt 28 is formed on the inner surface thereof with threads 30 which mate with the threads 20 of the bottle neck finish. As is clearly shown in Figure 2, the internal diameter of the lower portion of the skirt 28, as at 32, is such that it will engage the outer surface of the rib 22 in generally sealed relation.

The underside of the end panel 26 may be provided with a small depending rib 34 radially inwardly spaced relative to the skirt 28 so as, in combination with the upper part of the skirt 28, to define a channel 36 in which a suitable gasket 38 may be flowed.

The molded closure 14 thus described forms no part of this invention per se.

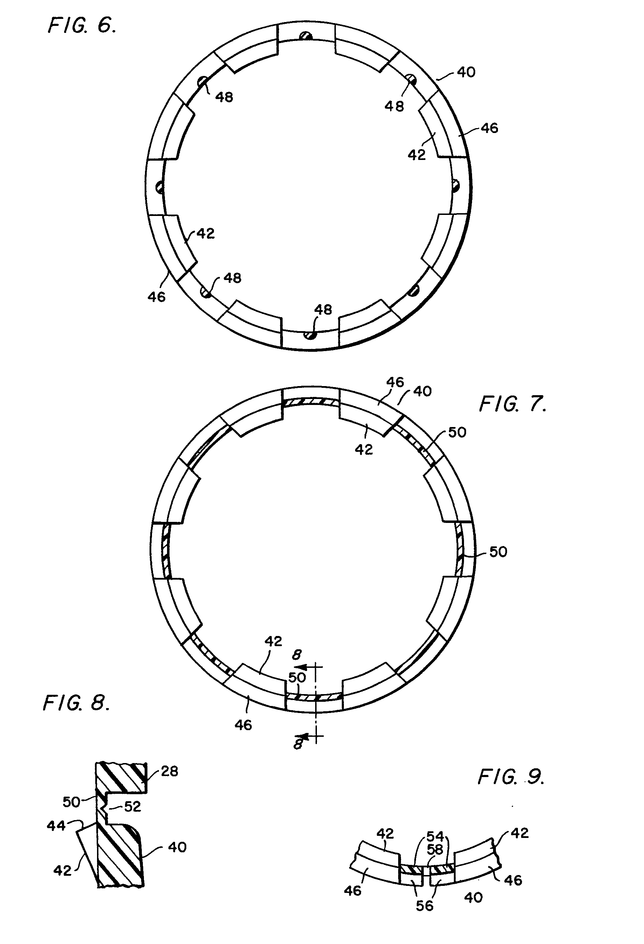

The closure 14 has depending from the lower end of the skirt 28 a tamper indicating band 40. At circumferentially spaced intervals, as is best shown in Figure 6, the band 40 is provided with molded in place barbs 42. The lower part of each molded barb 42 is hingedly connected to the lower part of the band 40, and each molded barb slopes radially inwardly and upwardly and terminates in an end 44 which generally faces the end panel 26. The band 40 is provided in radial alignment with each of the molded barbs 42 with a socket 46, the purpose of which will be described in detail hereinafter.

As is best shown in Figure 6, the tamper indicating band 40 is attached to the lower end of the skirt 28 by a plurality of circumferentially spaced small bridges 48.

It is also to be noted that the internal diameter of the tamper indicating band 40 is slightly greater than that of the interior of the skirt 28 and is equal to or slightly greater than the maximum diameter of the rib 22.

Referring now to Figure 3, it will be seen that in the application of the molded closure 14, the closure must be first pressed downwardly so that the molded barbs 42 will ride over the threads 20. As the molded closure is engaged with the neck finish 12, the threads 30 will engage the threads 20 and proceed to further force the closure down on the neck finish 12 with the molded barbs riding in a cam-like manner on the outer surface of the rib 32. As is shown in Figure 4, the molded barbs 42 will pivot relative to the band 40 and be received in the respective sockets 46.

When the molded closure 14 is fully applied to the neck finish 12, the molded barbs 42 will automatically swing back to their initial positions with their ends 44 opposing the surface of the shoulder 24. The molded barbs 42 are thus permanently locked in place.

It is to be understood that since the closure 14 is formed by injection molding and the barbs 42 are injection molded in place, there is no memory tendency of the barbs 42 to creep back into the general confines of the band 40, but will maintain their as molded positions so as to continue to be locked in place.

Referring now to Figure 5, it will be seen that when the closure is removed by unscrewing the same, the molded barbs 42 will positively prevent the tamper indicating band 40 from being removed with the closure, and as a result the bridges 48 will rupture and permit the closure 14 to be removed. The tamper indicating band then drops down on the neck finish, as shown in Figure 5.

Referring now to Figures 7 and 8, in lieu of the plurality of individial bridges 48, the band 40 may be joined to the bottom of the skirt by a thin rupturable series of bands or straps 50. Each band or strap 50 may be provided with a weakening line 52 in order to facilitate rupture.

Further, as shown in Figure 9, the tamper indicating band 40 may be permanently secured to the underside of the skirt 28 by bands or straps 54, and the band 40 may be divided into a plurality of separate circumferential segments 56. The adjacent segments 56 will be joined together by rupturable connectors 58.

With the embodiment of Figure 9, when the closure is to be removed, in lieu of the bands or straps 54 rupturing, they will function as hinge elements for the band segments 56 and the band segments 56 will swing or hinge radially outwardly so that the molded barbs will clear the shoulder 24.

Although only a preferred embodiment of the invention has been specifically illustrated and described herein, it is to be understood that minor variations may be made in the closure construction without departing from the spirit and scope of the invention as defined by the appended claims.

I claim:

1. A tamper indicating closure for use with a container neck finish having a lower downwardly facing shoulder, said closure comprising an end panel having a depending skirt, said skirt having a lower tamper indicating band; the improvement wherein said closure is of a molded plastic material construction, and said tamper indicating band carries a series of radially inwardly sloping, resilient, integral barbs having free ends generally directed toward said end panel for engaging below a container neck finish shoulder.

2. A tamper indicating closure according to claim 1 wherein said tamper indicating bands have molded openings radially aligned with said barbs, and each of said barbs is resiliently deflectable radially outwardly into the general confines of said tamper indicating band within a respective one of said molded openings.

3. A tamper indicating closure according to 1 or 2 wherein rupturable means detachably secure said tamper indicating band to said skirt.

4. A tamper indicating closure according to claim 1,2 or 3 wherein said tamper indicating band isformed in circumferential segments joined by rupturable sections whereby said tamper indicating band is radially separable to release said molded barbs.

5. A tamper indicating closure according to any of claims 1 to 4 wherein said skirt is of a diameter to tightly engage an intended container neck finish immediately above said shoulder.

6. A tamper indicating closure according to any of claims 1 to 5 wherein said skirt has internal threads.

7. A tamper indicating closure according to any of claims 1 to 6 wherein rupturable bridges secure said tamper indicating band to said skirt for facilitating automatic separation of said tamper indicating band from said skirt upon removal of said closure.

8.   A tamper indicating closure according to any of claims 1 to 7 wherein a rupturable web secures said tamper indicating band to said skirt for facilitating automatic separation of said tamper indicating band from said skirt upon removal of said closure.

FIG. I.

FIG. 2.

FIG. 3.

FIG. 4.

FIG. 5.

0146237

2/2

FIG. 6.

FIG. 7.

FIG. 8.

FIG. 9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 499 519 (GRUSSEN)<br><br>* Page 5, line 6 - page 6, line 9; figure 1 * | 1,3,6, 7 | B 65 D 41/34 |
| D,X | FR-A-2 411 770 (METAL CLOSURES)<br><br>* Page 8, line 33 - page 10, line 13; figures * | 1-4,6-8 | |
| X | FR-A-2 300 715 (GOURNELLE)<br><br>* Page 2, lines 19-24; figure 2 * | 1,3,5-7 | |

TECHNICAL FIELDS
SEARCHED (Int. Cl.4)

B 65 D

The present search report has been drawn up for all claims

| Place of search | Date of completion of the search | Examiner |
|---|---|---|
| THE HAGUE | 21-01-1985 | MARTIN A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82